# EUROPÄISCHE PATENTANMELDUNG

(11) **EP 1 045 188 A2**
(43) Veröffentlichungstag der Anmeldung: **18.10.2000**
(21) Anmeldenummer: 00104395.9
(22) Anmeldetag: 02.03.2000
(51) Int. Cl.: F16L 41/08, F02M 55/02

(54) **Druckleitungsanschlussmutter**

(30) Priorität: 14.04.1999 DE 19916796
(71) Anmelder: ROBERT BOSCH GMBH, 70442 Stuttgart (DE)
(72) Erfinder: Kaczynski, Bernhard, 71334 Waiblingen (DE); Popp, Heinz, 4661 Roitham (AT)

(57) **Zusammenfassung**

Die Erfindung betrifft eine Druckleitungsanschlussmutter (2) zum Anschliessen einer Druckleitung (1) an Funktionsteile (3), wie ein Rail oder einen Injektor eines Common-Rail-Systems, mit einem ersten Innenabschnitt (4), in dem ein Innengewinde ausgebildet ist, das mit einem Aussengewinde (10) an dem Funktionsteil (3) zusammenwirkt, mit einem zweiten Innenabschnitt (5), dessen Durchmesser sich konusartig verjüngt und der eine Druckschulter für die Druckleitung (1) bildet, und mit einem dritten Innenabschnitt (6), dessen Durchmesser kleiner als der Durchmesser des ersten Innenabschnitts (4) ist.

Um zu verhindern, dass die Druckleitung (1) an dem dritten Innenabschnitt (6) der Druckleitungsanschlussmutter (2) in Anlage kommt, ist an dem dritten Innenabschnitt (6) eine Zentrierhilfe (12) für die Druckleitung (1) vorgesehen.

## Beschreibung

### Stand der Technik

Die Erfindung betrifft eine Druckleitungsanschlussmutter zum Anschliessen einer Druckleitung an Funktionsteile, wie ein Rail oder einen Injektor eines Common-Rail-Systems, mit einem ersten Innenabschnitt, in dem ein Innengewinde ausgebildet ist, das mit einem Aussengewinde an dem Funktionsteil zusammenwirkt, mit einem zweiten Innenabschnitt, dessen Durchmesser sich konusartig verjüngt und der eine Druckschulter für die Druckleitung bildet, und mit einem dritten Innenabschnitt, dessen Durchmesser kleiner als der Durchmesser des ersten Innenabschnitts ist.

Beim Anziehen der Druckleitungsanschlussmutter kann sowohl ein Biegemoment als auch ein Torsionsmoment auf die Druckleitung aufgebracht werden. Das Biegemoment kann, wie das Torsionsmoment, zu einer Überbeanspruchung der Druckleitung führen.

Aufgabe der Erfindung ist es, das Aufbringen von Torsionsmomenten und Biegemomenten auf die Druckleitung beim Anschliessen der Druckleitung und beim Anziehen der Druckleitungsanschlussmutter zu vermeiden.

Die Aufgabe ist bei einer Druckleitungsanschlussmutter zum Anschliessen einer Druckleitung an Funktionsteile, wie ein Rail oder einen Injektor eines Common-Rail-Systems, mit einem ersten Innenabschnitt, in dem ein Innengewinde ausgebildet ist, das mit einem Aussengewinde an dem Funktionsteil zusammenwirkt, mit einem zweiten Innenabschnitt, dessen Durchmesser sich konusartig verjüngt und der eine Druckschulter für die Druckleitung bildet, und mit einem dritten Innenabschnitt, dessen Durchmesser kleiner als der Durchmesser des ersten Innenabschnitts ist, dadurch gelöst, dass an dem dritten Innenabschnitt eine Zentrierhilfe für die Druckleitung vorgesehen ist. Durch die Zentrierhilfe wird die Druckleitung relativ zu der Druckleitungsanschlussmutter zentriert. Dadurch wird verhindert, dass die Druckleitung beim Anschliessen und beim Anziehen der Druckleitungsanschlussmutter an dem dritten Innenabschnitt der Druckleitungsanschlussmutter in Anlage kommen kann. Das wiederum hat zur Folge, dass die Übertragung von Biege- und Torsionsmomenten von der Druckleitungsanschlussmutter auf die Druckleitung verhindert wird.

Eine besondere Ausführungsart der Erfindung ist dadurch gekennzeichnet, dass die Zentrierhilfe von einem Ring aus elastischem Material gebildet wird, der in dem dritten Abschnitt zwischen der Druckleitungsanschlussmutter und der Druckleitung angeordnet ist. Der elastische Ring bildet eine Art Abstandshalter, der verhindert, dass die Druckleitung an dem dritten Innenabschnitt der Druckleitungsanschlussmutter in Anlage kommen kann. Bei dem elastischen Material handelt es sich um einen beliebigen Kunststoff, vorzugsweise ein Elastomer.

Eine weitere besondere Ausführungsart der Erfindung ist dadurch gekennzeichnet, dass der Ring in einer Ringnut aufgenommen ist, die in dem dritten Innenabschnitt ausgespart ist. Die Ringnut dient dazu, den Ring bei der Montage der Druckleitungsanschlussmutter zu fixieren. Insbesondere wird eine axiale Verschiebung des Rings in der Mutter verhindert.

Eine weitere besondere Ausführungsart der Erfindung ist dadurch gekennzeichnet, dass der Ring im eingebauten Zustand mit etwa einem Drittel seines Querschnitts aus der Ringnut herausragt. Infolge von üblichen Toleranzvorgaben wird eine mögliche Schiefstellung der Druckleitung relativ zu der Druckleitungsanschlussmutter bis etwa 3° als zulässig angesehen. Die Einhaltung dieser Toleranzvorgaben wird durch das Herausragen des Rings aus der Ringnut gewährleistet. Der in der Ringnut gehaltene Ring verformt sich zunächst beim Aufschieben der Mutter auf die Druckleitung. D.h., erst wenn eine gewisse, von dem Material und den geometrischen Abmessungen des Rings, der Ringnut in der Mutter und dem Außendurchmesser der Druckleitung abhängige Verformung des Rings erfolgt ist, entfaltet der Ring seine Funktion als Abstandhalter.

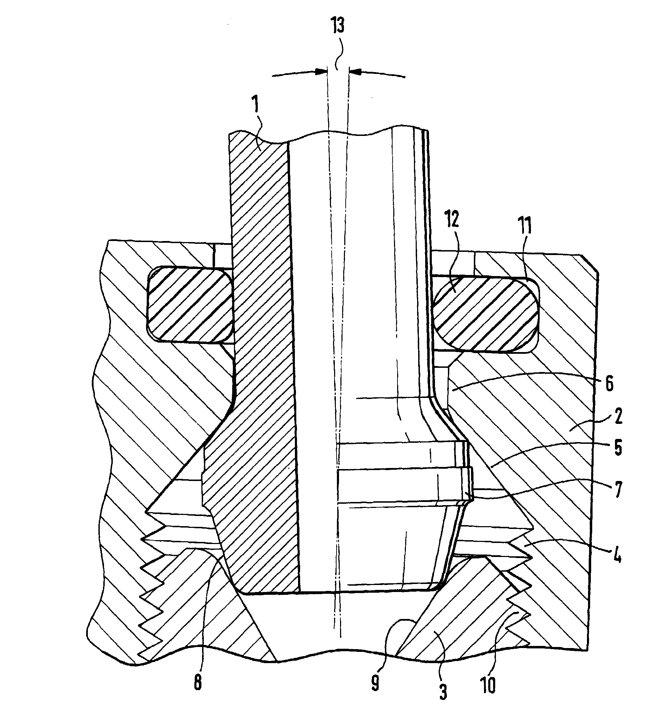

Weitere Vorteile, Merkmale und Einzelheiten der Erfindung ergeben sich aus der nachfolgenden Beschreibung, in der unter Bezugnahme auf die Zeichnung ein Ausführungsbeispiel der Erfindung im einzelnen beschrieben ist. Dabei können die in den Ansprüchen und in der Beschreibung erwähnten Merkmale jeweils einzeln für sich oder in beliebiger Kombination erfindungswesentlich sein.

In der beiliegenden Figur sieht man eine teilweise geschnitten dargestellte Druckleitung 1. Die Druckleitung 1 ist mit Hilfe einer Druckleitungsanschlussmutter 2 an ein Funktionsteil 3 angeschlossen. Bei dem Funktionsteil 3 kann es sich um ein Rail oder einen Injektor eines Common-Rail-Systems handeln.

"Common-Rail" bedeutet soviel wie "gemeinsame Leitung". Im Gegensatz zu herkömmlichen Hochdruckeinspritzsystemen, in denen der Kraftstoff über getrennte Leitungen zu den einzelnen Brennräumen gefördert wird, werden die Einspritzdüsen in Common-Rail-Einspritzsystemen aus einer gemeinsamen Leitung gespeist.

Die Druckleitungsanschlussmutter 2 weist einen ersten Innenabschnitt 4 mit einem Innengewinde auf. An den ersten Innenabschnitt 4 schliesst sich ein zweiter Innenabschnitt 5 an, der sich konusartig verjüngt. An den zweiten Innenabschnitt 5 schliesst sich ein dritter Innenabschnitt 6 an.

Die Druckleitung 1 weist eine wulstartige Verdickung 7 mit einem sich verjüngenden Ende 8 auf. Das sich verjüngende Ende 8 der Druckleitung 1 liegt an einer trichterförmigen Öffnung 9 an, die in dem Funktionsteil 3 ausgebildet ist. Auf der von der trichterförmigen Öffnung 9 abgewandten Seite des Funktionsteils 3 ist ein Aussengewinde 10 ausgebildet.

Das Aussengewinde 10 des Funktionsteils 3 wirkt mit dem Innengewinde 4 an der Druckleitungsanschlussmutter 2 zusammen. Wenn die Druckleitungsanschlussmutter 2 auf das Aussengewinde 10 des Funktionsteils 3 aufgeschraubt wird, kommt der zweite Innenabschnitt 5 der Druckleitungsanschlussmutter 2 an der wulstartigen Verdickung 7 der Druckleitung 1 zur Anlage. Dadurch wird das sich verjüngende Ende 8 der Druckleitung 1 in die trichterförmige Öffnung 9 des Funktionsteils 3 gepresst.

Beim Anziehen der Druckleitungsanschlussmutter 2 kann es passieren, dass die Druckleitung 1, je nach Einbaulage, an dem dritten Innenabschnitt 6 der Druckleitungsanschlussmutter 2 in Anlage kommt. Um das zu verhindern, ist in einer in der Druckleitungsanschlussmutter 2 ausgesparten Ringnut 11 ein Ring 12 angeordnet. Der Ring 12 verhindert, dass die Druckleitung 1 beim Anschliessen an den dritten Innenabschnitt 6 der Druckleitungsanschlussmutter 2 in Anlage kommen kann. Bezüglich seiner Verformbarkeit und seinen Abmessungen ist der Ring 12 so ausgelegt, dass eine Schiefstellung der Druckleitung 1 um einen Winkel 13 möglich ist.

## Patentansprüche

1. Druckleitungsanschlussmutter (2) zum Anschliessen einer Druckleitung (1) an Funktionsteile (3), wie ein Rail oder einen Injektor eines Common-Rail-Systems, mit einem ersten Innenabschnitt (4), in dem ein Innengewinde ausgebildet ist, das mit einem Aussengewinde (10) an dem Funktionsteil (3) zusammenwirkt, mit einem zweiten Innenabschnitt (5), dessen Durchmesser sich konusartig verjüngt und der eine Druckschulter für die Druckleitung (1) bildet, und mit einem dritten Innenabschnitt (6), dessen Durchmesser kleiner als der Durchmesser des ersten Innenabschnitts (4) ist, **dadurch gekennzeichnet,** dass an dem dritten Innenabschnitt (6) eine Zentrierhilfe (12) für die Druckleitung (1) vorgesehen ist.

2. Druckleitungsanschlussmutter nach Anspruch 1, **dadurch gekennzeichnet,** dass die Zentrierhilfe von einem Ring (12) aus elastischem Material gebildet wird, der in dem dritten Abschnitt zwischen der Druckleitungsanschlussmutter (2) und der Druckleitung (1) angeordnet ist.

3. Druckleitungsanschlussmutter nach Anspruch 2, **dadurch gekennzeichnet,** dass der Ring (12) in einer Ringnut (11) aufgenommen ist, die in dem dritten Innenabschnitt (6) ausgespart ist.

4. Druckleitungsanschlussmutter nach Anspruch 3, **dadurch gekennzeichnet,** dass der Ring (12) im eingebauten Zustand mit etwa einem Drittel seines Querschnitts aus der Ringnut (11) herausragt.
